Europäisches Patentamt

European Patent Office

Office européen des brevets

(19)

(11) Publication number: **0 432 764 A1**

## (12) EUROPEAN PATENT APPLICATION

(21) Application number: 90123987.1

(22) Date of filing: 12.12.90

(51) Int. Cl.⁵ **B60T 8/88**

(30) Priority: 13.12.89 JP 323634/89

(43) Date of publication of application:
**19.06.91 Bulletin 91/25**

(84) Designated Contracting States:
**DE GB**

(71) Applicant: SUMITOMO ELECTRIC INDUSTRIES, LTD.
5-33, Kitahama 4-chome, Chuo-ku
Osaka-shi, Osaka 541(JP)

(72) Inventor: Shinomiya, Takashi, c/o Itami Works of
Sumitomo Electric Industries, Ltd.
1-1, Koyakita 1-chome, Itami-shi, Hyogo(JP)

(74) Representative: Glawe, Delfs, Moll & Partner
Patentanwälte
Postfach 26 01 62
W-8000 München 26(DE)

(54) Wheel speed control device.

(57) A wheel speed control device (1) for carrying out operations based on signals from wheel speed sensors (51) and detecting that vehicle wheels are going to lock or recovering from locked state to control brake fluid pressures. It has an electrical detecting circuit (5) having a plurality of wheel speed sensors (51-54) connected in series for detecting wire breakage in any of the sensors (51-54), and a software-based (4) detector for detecting a channel (or a wheel speed sensor) having a broken wire. A non-volatile fault-code memory (7) is also provided which is accessible, when the electrical detecting circuit (5) detects wire breakage and the software-based detector (4) detects the wire-broken channel, to write in the memory (7) a code showing the occurrence of wire breakage and a code indicative of the channel having the broken wire.

EP 0 432 764 A1

FIG.1

# WHEEL SPEED CONTROL DEVICE

This invention relates to a wheel speed control device having means for detecting wire breakage in wheel speed sensors.

A wheel speed control device functions to calculate control reference speeds such as an estimated vehicle speed and a reference wheel speed on the basis of the wheel speed signals from wheel speed sensors, to detect whether the wheels are going to lock or recovering from locking state by comparing the control reference speed with the actual wheel speed, and to control the brake pressure so that the frictional force between the road surface and the tires will be most effectively obtained.

Therefore, if there occurs any malfunction in the wheel speed sensors such as breakage of wire, the control itself might get out of order.

In order to prevent this, it is a common practice to prohibit the antilock control if wire breakage is detected in the wheel speed sensors.

Wire breakage detection methods employed for this purpose are classified into two groups; i.e. hardware-based ones and software-based ones.

In the hardware-based methods, electrical circuits adapted to be disconnected by wire breakage are provided and they are checked for electrical connection while the ignition switch is ON. If such detecting circuits are provided individually for each wheel speed sensor (an automobile is usually provided with four sensors), the number of input and output ports of a custom IC increases. This leads to increase in the size of a printed circuit board and thus increase cost. In order to prevent this, four sensors connected in series are ordinarily accommodated in a single circuit (or alternatively two circuits may be used each accommodating two sensors connected in series). A detection signal is given if there is wire breakage in any one of the sensors.

In the software-based wire breakage detection, any channel having a wire-broken sensor is specified from the fact that no signal is transmitted from this particular sensor whereas the other sensors are producing signals while the vehicle is running.

In some of the above-described prior art methods for detecting wire breakage, if the hardware detects wire breakage, a warning lamp is turned ON and simultaneously the system is disabled. In other prior art methods, if the hardware detects wire breakage, only the warning lamp is turned ON and the system is disabled only after the software detects such wire breakage.

The hardware-based detecting method can detect the fact that wire breakage has happened in one of a plurality of sensors, but cannot determine in which channel the wire breakage has happened.

On the other hand, with the software-based detecting method, no detection is possible while the vehicle is at a stop because there is no sensor output. Further, even if the channel having a broken wire is detected while the vehicle is running, the fact of wire breakage might disappear when the ignition switch is turned OFF or if the wire breakage is incomplete and thus returns to normal due to vibration or the like. Thus, it is impossible with the software-based detecting method to specify the channel having a broken wire while the vehicle is at a stop even if it is used in combination with the hardware-based one. This will make maintenance difficult.

An object of the present invention is to provide a wheel speed control device having means for detecting wire breakage in wheel speed sensors, which obviates the abovesaid problems.

In accordance with the present invention, a wheel speed control device is provided with an electrical sensor wire breakage detecting circuit including a plurality of wheel speed sensors connected in series, a software-based detecting means for detecting a channel or a wheel speed sensor having a wire breakage, and a non-volatile fault-code memory which is accessible upon detection of wire breakage by said electrical detecting circuit and detection of a wire-broken channel by said software-based detecting means to store a code showing the occurrence of wire breakage and a code indicative of the channel having a wire breakage.

The data temporarily stored in a non-volatile fault-code memory are not erased when the ignition switch is turned OFF. According to this invention, these memory data contain data specifying the channel having a broken wire. These stored data are taken out and displayed on a monitor to facilitate checkup and repair.

After the wire breakage has been repaired, the stored data are erased by suitable means.

Other features and objects of the present invention will become apparent from the following description taken with reference to the accompanying drawings, in which:

Fig. 1 is a diagrammatic view embodying this invention; and

Fig. 2 is a flow chart for the wire breakage detection.

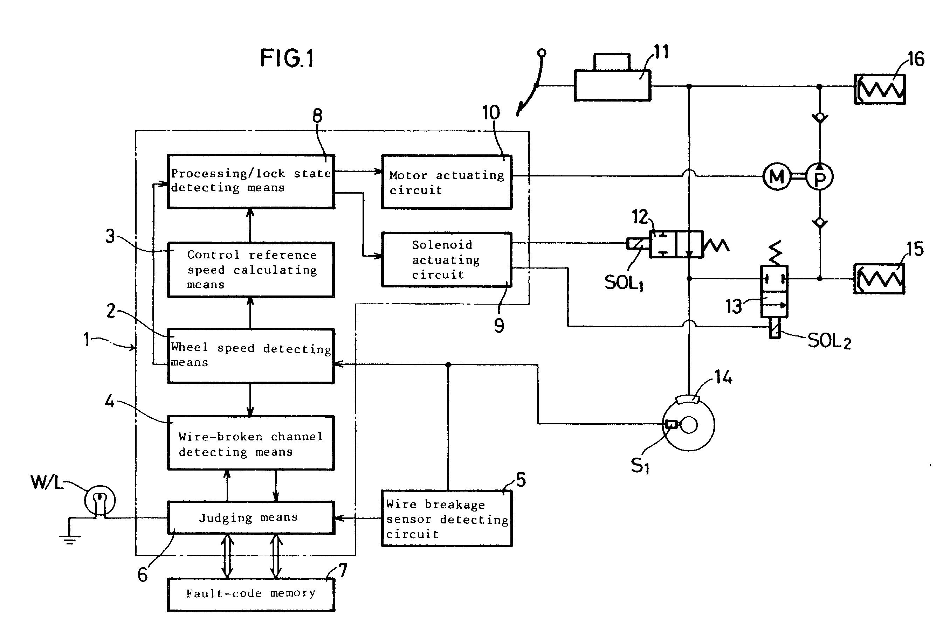

As shown in Fig. 1, an electronic control unit 1 carries out various calculations and judgements on basis of signals from wheel speed sensors S1 - S4 (only S1 is shown) and outputs brake fluid pressure control signals to pressure control valves in fluid pressure lines.

The AC signal from the wheel speed sensor S1 is converted into pulses, which are counted in a wheel speed detecting means 2 to calculate the wheel speed. The wheel speed signals thus obtained are fed to a control reference speed calculating means 3 and a wire-broken channel detecting means 4.

At a line leading from each wheel speed sensor to the wheel speed detecting means 2, there is provided an electrical sensor wire breakage detecting circuit 5 having four (or two in each of two circuits) sensors connected in series. It carries out hardware-based wire breakage detection when the ignition switch is ON. The results are supplied to a judging means 6. When wire breakage is detected, as will be described later, the judging means 6 will gain access to a non-volatile fault-code memory 7 such as an EEPROM and writes a code showing the occurrence of wire breakage unless such a code is already written. Then it turns on the warning lamp and prohibits antilock control. Thereafter the wire-broken channel detecting means 4 carries out software-based wire breakage detection. When a channel having the broken wire is detected, a code indicative of the wire-broken channel is written down on the code showing the occurrence of wire breakage, which has been stored in the memory 7.

If the antilock control is not prohibited, it is carried out in the following ordinary manner.

If the difference between a control reference speed and the actual wheel speed exceeds a predetermined value, a processing/lock state detecting means 8 gives a pressure reduction command to a solenoid actuating circuit 9, judging that the wheel is beginning to lock. In response to this command, the solenoid actuating circuit 9 will energize solenoids SOL1 and SOL2. This will actuate a normally-open pressure control valve 12, which closes a brake fluid supply passage from a fluid pressure generator including a master cylinder 11 and an accumulator 16. A normally-closed pressure control valve 13 opens a brake fluid discharge passage. As a result, the brake fluid at the side of a wheel cylinder 14 will flow into a reservoir 15, thus reducing the brake fluid pressure.

On the other hand, when the pressure reduction begins, a motor M will be started by a motor actuating circuit 10 and the fluid in the reservoir 15 will be drawn out by a pump p and returned to the supply side.

When the wheel speed begins to recover as a result of pressure reduction and the difference between the control reference speed and the actual wheel speed lowers below a predetermined value, the lock state detecting means 8 judges that the locking tendency has disappeared, giving a pressure increase command to the solenoid actuating circuit 9. This command will deenergize the solenoids SOL1 and SOL2, allowing the pressure control valves 12 and 13 to return to their original positions shown in the figure. Thus the pressure will rise again.

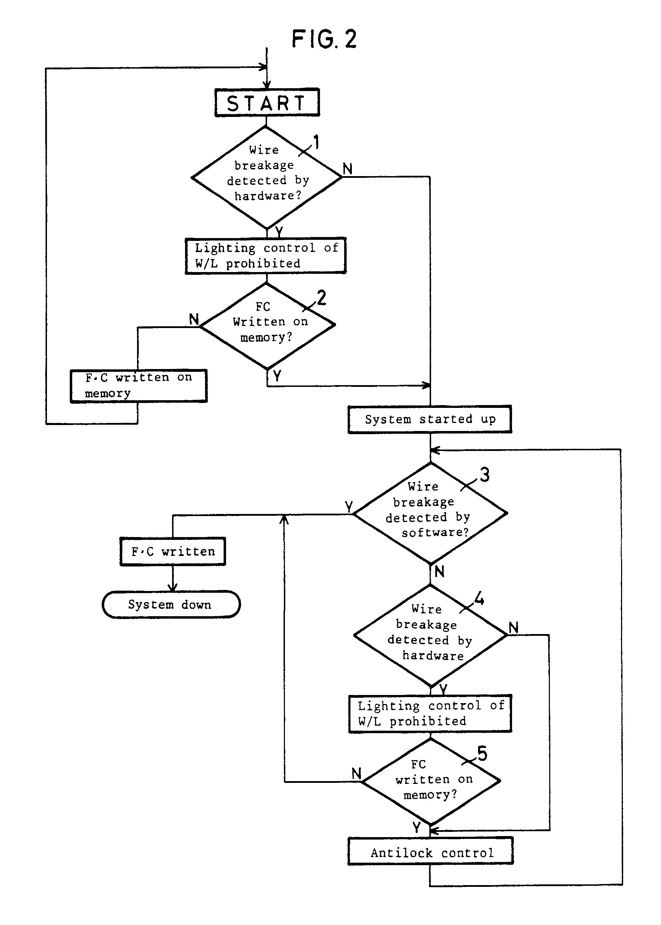

Fig. 2 shows the flow chart for the wire breakage detection. This detection procedure starts when the ignition switch is turned ON. First, it is determined in Step 1 whether wire breakage has been detected in the hardware-based wire breakage detection. If judged YES, it is judged in Step 2 whether or not the code showing the occurrence of wire breakage is written in the fault-code memory. If judged NO, the code is written. Then the program returns to the start point.

After writing down the code showing the results of hardware-based detection, the software-based wire breakage detection system is started. Then it is checked in Step 3 whether or not the channel having the broken wire has been pinpointed. If judged YES, the code specifying the channel is written in the fault-code memory and the system is disabled. If judged NO in Step 3, it is checked in Step 4 whether or not the judgement of the hardware-based detection is correct and in Step 5 whether or not the code showing the occurrence of wire breakage is written in the memory. If judged NO in Step 5, the code is written and the system is disabled.

If judged NO both in Steps 1 and 4, this shows that there is no wire breakage. Thus, preparations for starting antilock control will be made.

## Claims

1. A wheel speed control device for controlling brake fluid pressures by carrying out operations based on signals from wheel speed sensors and detecting that vehicle wheels are going to lock or recovering from locked state, said wheel speed control device comprising an electrical detecting circuit including a plurality of wheel speed sensors connected in series for detecting wire breakage in any of said sensors, a software-based detecting means for detecting a channel having a wire breakage, and a non-volatile fault-code memory which is accessible, when said electrical detecting circuit detects wire breakage and said software-based detecting means detects the wire-broken channel, for storing a code showing the occurrence of wire breakage and a code indicative of the channel having a wire breakage.

## FIG.1

Processing/lock state detecting means — 8

Motor actuating circuit — 10

Control reference speed calculating means — 3

Solenoid actuating circuit — 9

Wheel speed detecting means — 2

Wire-broken channel detecting means — 4

Judging means — 6

Wire breakage sensor detecting circuit — 5

W/L

Fault-code memory — 7

1

11

16

12  SOL₁

13  SOL₂

15

14

S₁

M  P

EP 0 432 764 A1

# FIG. 2

```
                    ┌──────────────┐
            ──────►─┤    START     │
            │       └──────┬───────┘
            │              │
            │          ╱───┴───╲
            │        ╱    Wire   ╲  1
            │      ╱    breakage   ╲      N
            │     ╲   detected by   ╱────────────┐
            │      ╲    hardware?  ╱              │
            │        ╲───┬───╲                   │
            │            │ Y                      │
            │     ┌──────┴────────┐               │
            │     │Lighting control│              │
            │     │ of W/L prohibited│            │
            │     └──────┬────────┘               │
            │            │                        │
            │        ╱───┴───╲                    │
            │   N  ╱    FC     ╲  2                │
        ┌───┴────◄   Written on  ╲                │
        │         ╲   memory?   ╱                 │
        │           ╲───┬───╲                     │
        │               │ Y                       │
  ┌─────┴──────┐        └──────────────►──────────┤
  │ F·C written │                                 │
  │ on memory   │                                 │
  └─────────────┘                                 │
                                          ┌───────┴────────┐
                                          │System started up│
                                          └───────┬────────┘
                                                  │
                                              ╱───┴───╲
                                        Y   ╱   Wire    ╲  3
                        ┌──────────────◄   breakage      ╲
                        │                ╲ detected by   ╱
                        │                 ╲  software?  ╱
                        │                   ╲───┬───╲
                        │                       │ N
                ┌───────┴────┐             ╱───┴───╲
                │ F·C written │      N   ╱   Wire    ╲  4
                └───────┬────┘    ┌────◄   breakage    ╲
                        │         │      ╲ detected by ╱
                ╭───────┴──────╮  │       ╲ hardware  ╱
                │ System down   │  │        ╲───┬───╲
                ╰──────────────╯  │            │ Y
                        ▲          │    ┌──────┴────────┐
                        │          │    │Lighting control│
                        │          │    │of W/L prohibited│
                        │          │    └──────┬────────┘
                        │          │           │
                        │          │       ╱───┴───╲
                        │     N    │     ╱    FC     ╲  5
                        └──────────┼───◄   written on ╲
                                   │     ╲  memory?  ╱
                                   │       ╲───┬───╲
                                   │           │ Y
                                   └──────────►│
                                        ┌──────┴────────┐
                                        │Antilock control│
                                        └──────┬────────┘
                                               │
                                               └──────────►
```

6

European
Patent Office

**EUROPEAN SEARCH
REPORT**

Application Number

**EP 90 12 3987**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 909 152 (ALLIED-SIGNAL) <br> * the whole document * <br> – – – | 1 | B 60 T <br> 8/88 |
| A | EP-A-0 328 081 (SUMITOMO) <br> * abstract; figures 2-4 * <br> – – – | 1 | |
| A | DE-A-3 447 449 (PCB CONTROLS) <br> * the whole document * <br> – – – | 1 | |
| A | EP-A-0 147 720 (NISSAN) <br> * abstract * <br> – – – | 1 | |
| P,A | EP-A-0 357 922 (DAIMLER-BENZ) <br> * abstract * * column 10, lines 23 - 35 * <br> – – – – – | 1 | |

TECHNICAL FIELDS
SEARCHED (Int. Cl.5)

B 60 T

The present search report has been drawn up for all claims

| Place of search | Date of completion of search | Examiner |
|---|---|---|
| Berlin | 05 March 91 | BLURTON M D |